(19) Europäisches Patentamt
European Patent Office
Office européen des brevets

(11) **EP 4 393 791 B1**

(12) **EUROPEAN PATENT SPECIFICATION**

(45) Date of publication and mention
of the grant of the patent:
**29.04.2026  Bulletin 2026/18**

(21) Application number: **21961027.6**

(22) Date of filing: **22.10.2021**

(51) International Patent Classification (IPC):
**B62D 5/04** *(2006.01)*      **B60W 40/114** *(2012.01)*
**B60W 10/08** *(2006.01)*

(52) Cooperative Patent Classification (CPC):
**B62D 6/04; B60L 1/003; B60L 15/2036;**
**B60W 10/08;** B60L 2220/42; B60L 2220/46;
B60L 2240/12; B60L 2240/16; B60L 2240/18;
B60L 2240/20; B60L 2240/22; B60L 2240/24;
B60L 2240/421; B60L 2240/423; B60L 2240/461;
(Cont.)

(86) International application number:
**PCT/CN2021/125550**

(87) International publication number:
**WO 2023/065278 (27.04.2023 Gazette 2023/17)**

(54) **PULL DRIFT COMPENSATION ASSIST SYSTEM AND CONTROL METHOD**

HILFSSYSTEM ZUR KOMPENSATION VON ZUGDRIFT UND STEUERUNGSVERFAHREN

SYSTÈME D'ASSISTANCE À LA COMPENSATION DE DÉRIVE DE TRACTION ET PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.07.2024   Bulletin 2024/27**

(73) Proprietor: **Shenzhen Yinwang Intelligent
Technologies Co., Ltd.
Shenzhen City, Guangdong 518129 (CN)**

(72) Inventors:
• WANG, Kai
Shenzhen, Guangdong 518129 (CN)
• LI, Kun
Shenzhen, Guangdong 518129 (CN)
• SU, Lingxin
Shenzhen, Guangdong 518129 (CN)

(74) Representative: **Gill Jennings & Every LLP
The Broadgate Tower
20 Primrose Street
London EC2A 2ES (GB)**

(56) References cited:
CN-A- 104 401 392      CN-A- 106 741 138
CN-A- 108 163 044      CN-A- 108 177 688
CN-A- 110 316 247      CN-A- 111 731 315
DE-A1- 102011 121 117      DE-A1- 102014 204 461
DE-A1- 102017 204 990      JP-A- 2013 103 664

(52) Cooperative Patent Classification (CPC): (Cont.)
B60W 2510/202; B60W 2710/083; B60W 2720/14;
B60W 2720/403; B60W 2720/406; B62D 5/0472;
B62D 6/003; B62D 9/002

## Description

### TECHNICAL FIELD

This application relates to the field of automobile control technologies, and in particular, to a pull drift compensation assist system and a control method.

### BACKGROUND

If a vehicle encounters strong cross wind, an inclined road surface, or the like when running straight, the vehicle may deviate. In addition, a factor of the vehicle, for example, different wear degrees and different tire pressure of tires of left and right wheels, poor suspension adjustment, and a poor four-wheel positioning parameter, may also cause deviation of the vehicle different extents. In this case, a driver needs to apply extra hand force to a steering wheel to resist the deviation, to keep the vehicle running straight. Therefore, the deviation of the vehicle will increase a maneuvering burden of the driver to some extent.

It is necessary to compensate for the extra hand force applied by the driver to resist the deviation of the vehicle, to reduce the maneuvering burden of the driver. In an existing pull drift compensation (PDC, Pull Drift Compensation) technology, a compensation torque that is in a same direction as the hand force of the driver is applied by using a power steering motor for electric power steering (EPS, Electric Power Steering), to slowly implement compensation to make the hand force of the driver 0 or close to 0. According to the existing pull drift compensation technology, although compensation for the hand force of the driver can be implemented, in a compensation process, the vehicle runs straight. As a result, a speed of the power steering motor is 0, but an output torque is not 0. In other words, the power steering motor is in a blocked state. In this case, if the compensation torque output by the power steering motor is high, there is a risk of burning the power steering motor. In the existing pull drift compensation technology, the compensation torque is usually limited to a small range to reduce this risk, so that compensation for the hand force of the driver may be implemented only within a small range. In addition, the existing pull drift compensation technology totally depends on electric power steering without redundancy control. Once the power steering motor for electric power steering is faulty, pull drift compensation fails. DE 10 2011 121117 A1 discloses a method for crosswind stabilization of a motor vehicle comprising front and rear wheels, wherein the front and/or rear wheels are driven via an actively controllable differential with a superposition gear for variable torque distribution to both output sides, as well as a device for detecting a lateral offset. DE 10 2014 204461 A1 discloses a method for improving the straight-line running of a vehicle. DE 10 2017 204990 A1 discloses power steering systems for vehicles. In particular, the disclosure relates to systems and methods that compensate for forces applied to the steering system that may compromise the directional stability of the vehicle.

### SUMMARY

In view of this, embodiments of this application provide a pull drift compensation assist system and a control method, to resolve technical problems of a small compensation range, motor blocking, and no redundancy control of a pull drift compensation system in the conventional technology.

According to a first aspect, an embodiment of this application provides a pull drift compensation control method, including:

determining status information of differential drive assist steering (DDAS, Differential Drive Assist Steering); and
when differential drive assist steering works, performing pull drift compensation through differential drive assist steering; or
when differential drive assist steering fails, performing pull drift compensation through electric power steering.

In a possible implementation, the step of performing pull drift compensation through differential drive assist steering includes:

iteratively calculating a total differential drive assist torque, to make hand force of a driver gradually approach 0;
calculating drive torques of two front wheels based on the total differential drive assist torque; and
performing yaw compensation control on a vehicle based on the total differential drive assist torque, to control an additional yaw moment of the vehicle to 0, and calculating drive torques of two rear wheels.

In a possible implementation, the step of iteratively calculating a total differential drive assist torque, to make hand force of a driver gradually approach 0 includes:

calculating a short-term differential drive assist torque based on the hand force of the driver and an external cause of deviation of the vehicle;

calculating a long-term differential drive assist torque based on the hand force of the driver and an internal cause of the deviation of the vehicle;

calculating a sum of the short-term differential drive assist torque and the long-term differential drive assist torque, to obtain the total differential drive assist torque for compensating for the hand force of the driver; and

iteratively calculating the total differential drive assist torque, to make the hand force of the driver gradually approach 0.

In a possible implementation, the step of performing pull drift compensation through electric power steering includes:

calculating drive torques of four wheels respectively, and performing yaw compensation control on a vehicle, to control an additional yaw moment of the vehicle to 0; and

iteratively calculating a total torque of a power steering motor based on the additional yaw moment being 0, to make hand force of a driver gradually approach 0.

In a possible implementation, the step of iteratively calculating a total torque of a power steering motor based on the additional yaw moment being 0, to make hand force of a driver gradually approach 0 includes:

calculating a short-term torque of the power steering motor based on the hand force of the driver and an external cause of deviation of the vehicle;

calculating a long-term torque of the power steering motor based on the hand force of the driver and an internal cause of the deviation of the vehicle;

calculating a sum of the short-term torque of the power steering motor and the long-term torque of the power steering motor, to obtain the total torque of the power steering motor for compensating for the hand force of the driver; and

iteratively calculating the total torque of the power steering motor, to make the hand force of the driver gradually approach 0.

In a possible implementation, before the step of determining status information of differential drive assist steering, the pull drift compensation control method includes:

determining whether pull drift compensation is enabled; and

if pull drift compensation is enabled, determining the status information of differential drive assist steering; or

if pull drift compensation is disabled, controlling, by using a vehicle control unit, a vehicle to run.

In a possible implementation, the step of determining whether pull drift compensation is enabled includes:

determining whether the vehicle is in a straight running state;

determining whether pull drift compensation is already in an enabled state; and

if pull drift compensation is already in the enabled state, determining the status information of differential drive assist steering; or

if pull drift compensation is not in the enabled state, determining whether hand force of a driver reaches a preset hand force threshold;

if the hand force of the driver reaches the preset hand force threshold, determining whether time of reaching the hand force threshold reaches preset time; and

if the time of reaching the hand force threshold reaches the preset time, enabling pull drift compensation, and determining the status information of differential drive assist steering.

According to a second aspect, an embodiment of this application provides a pull drift compensation assist system, including a control module, a main compensation module, and an auxiliary compensation module that communicate with each other.

The control module is configured to determine status information of differential drive assist steering.

When differential drive assist steering works, the main compensation module is configured to control, through the control module, pull drift compensation to be performed through differential drive assist steering.

When differential drive assist steering fails, the auxiliary compensation module is configured to control, through the control module, pull drift compensation to be performed through electric power steering.

In a possible implementation, the control module is connected to drive motors of four wheels of a vehicle, and is connected to a power steering motor connected to a steering gear of the vehicle.

When the main compensation module is started, the control module controls the four drive motors to perform pull drift compensation.

When the auxiliary compensation module is started, the control module controls the power steering motor to perform pull drift compensation.

According to a third aspect, an embodiment of this application provides an electronic device, including an in-vehicle electronic control system, a signal collection and estimation module, and an execution apparatus. The in-vehicle electronic control system has the pull drift compensation assist system as described in the second aspect. The signal collection and estimation module has a plurality of vehicle status sensors configured to measure vehicle status parameters. The execution apparatus has the drive motors and the power steering motor as described in the second aspect.

The signal collection and estimation module sends a plurality of vehicle status parameters collected by the plurality of vehicle status sensors to the in-vehicle electronic control system. The in-vehicle electronic control system controls the drive motors and the power steering motor based on the plurality of vehicle status parameters, so that the electronic device performs the pull drift compensation control method as described in the first aspect.

According to a fourth aspect, an embodiment of this application provides a computer-readable storage medium, including program instructions. When the program instructions run on a computer device, the computer device is enabled to perform the pull drift compensation control method as described in the first aspect.

Compared with the conventional technology, the technical solutions have at least the following beneficial effects.

According to the pull drift compensation assist system and the control method disclosed in embodiments of this application, compensation can be performed through differential drive assist steering, to effectively reduce occurrence of a long-time motor blocking phenomenon, reduce a motor fault risk, and reduce a motor performance deterioration degree. Compensation through differential drive assist steering may expand a hand force compensation range. Main/auxiliary system redundancy backup of differential drive assist steering and electric power steering may reduce a failure probability of pull drift compensation, and improve running safety of the vehicle. Long-term compensation and short-term compensation are performed concurrently, so that compensation for both deviation caused by an external factor and deviation caused by a factor of the vehicle may be implemented.

## BRIEF DESCRIPTION OF DRAWINGS

FIG. 1 is a flowchart of a pull drift compensation control method according to Embodiment 1 of this application;

FIG. 2 is a flowchart of S300 in the pull drift compensation control method according to Embodiment 1 of this application;

FIG. 3 is a flowchart of S310 in the pull drift compensation control method according to Embodiment 1 of this application;

FIG. 4 is a flowchart of S400 in the pull drift compensation control method according to Embodiment 1 of this application;

FIG. 5 is a flowchart of S420 in the pull drift compensation control method according to Embodiment 1 of this application;

FIG. 6 is a flowchart before S200 in the pull drift compensation control method according to Embodiment 1 of this application;

FIG. 7 is a flowchart of S100 in the pull drift compensation control method according to Embodiment 1 of this application;

FIG. 8 is a schematic diagram of modules of a pull drift compensation assist system according to Embodiment 2 of this application;

FIG. 9 is a schematic working diagram of the pull drift compensation assist system according to Embodiment 2 of this application; and

FIG. 10 is a diagram of a system architecture of an electronic device according to Embodiment 3 of this application.

Reference numerals:

10: in-vehicle electronic control system; 11: control module; 12: main compensation module; 13: auxiliary compensation module; 14: drive motor; 15: steering gear; 16: power steering motor; 20: signal collection and estimation module; 30: execution apparatus.

# EP 4 393 791 B1

## DESCRIPTION OF EMBODIMENTS

Terms used in embodiments of this application are merely for the purpose of describing specific embodiments, but are not intended to limit this application. The terms "a/an", "the" and "this" of singular forms used in embodiments and the appended claims of this application are also intended to include plural forms, unless otherwise specified in the context clearly.

### Embodiment 1

Embodiment 1 of this application discloses a pull drift compensation control method, to resolve technical problems of a small compensation range, motor blocking, no redundancy control, and the like of an existing pull drift compensation technology.

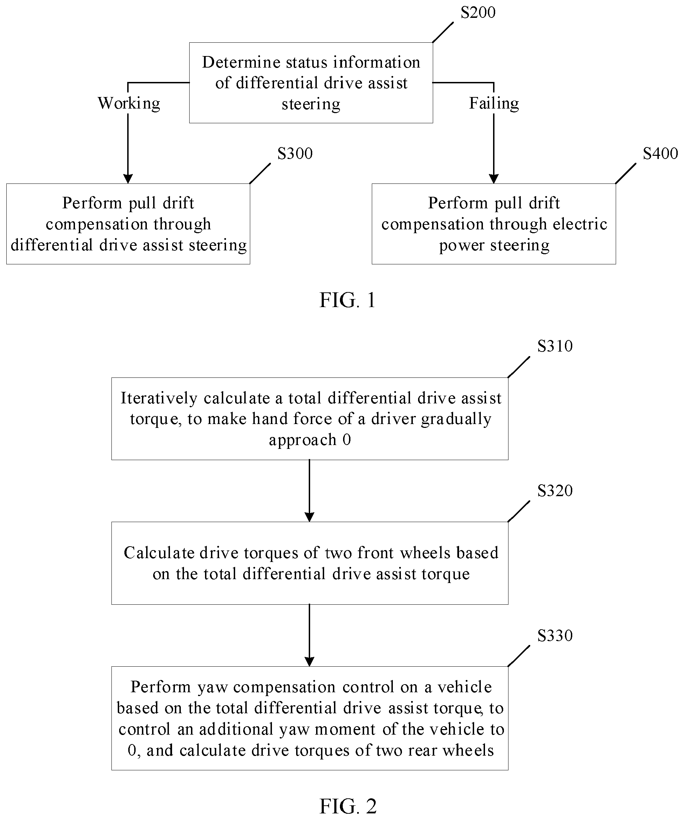

As shown in FIG. 1, the pull drift compensation control method includes the following steps.

S200: Determine status information of differential drive assist steering.

S300: When differential drive assist steering works, perform pull drift compensation through differential drive assist steering.

S400: When differential drive assist steering fails, perform pull drift compensation through electric power steering.

In S200, differential drive assist steering is used as a main system, and electric power steering is used as an auxiliary system. The main system and the auxiliary system are mainly switched by determining, based on the status information of differential drive assist steering, whether pull drift compensation control is implemented through differential drive assist steering of the main system or through electric power steering of the auxiliary system. Differential drive assist steering is a new assisted steering technology in which steering power is provided by using a differential torque of left and right front wheels. Differential control of left and right wheels may be implemented based on an operation performed by a driver on a steering wheel, to generate a differential drive assist torque, and corresponding steering power is provided based on a requirement of the driver. An assist characteristic of differential drive assist steering that power varies with a speed also determines a tradeoff between assisted steering and road sense maintenance. When no fault (for example, a drive motor fault) occurs on differential drive assist steering, pull drift compensation control is implemented through differential drive assist steering of the main system; or when differential drive assist steering is faulty, pull drift compensation control is implemented through electric power steering of the auxiliary system.

In S300 and S400, torques of drive motors and a torque of a power steering motor, that are required for compensating for hand force of the driver, are mainly calculated. A working principle of differential drive assist steering of the main system is different from that of electric power steering of the auxiliary system, so that calculation methods for the compensation torques are also different. The following describes differential drive assist steering and electric power steering in detail respectively.

As shown in FIG. 2, S300 in the pull drift compensation control method in Embodiment 1 includes the following steps.

S310: Iteratively calculate a total differential drive assist torque, to make the hand force of the driver gradually approach 0.

S320: Calculate drive torques of two front wheels based on the total differential drive assist torque.

S330: Perform yaw compensation control on a vehicle based on the total differential drive assist torque, to control an additional yaw moment of the vehicle to 0, and calculate drive torques of two rear wheels.

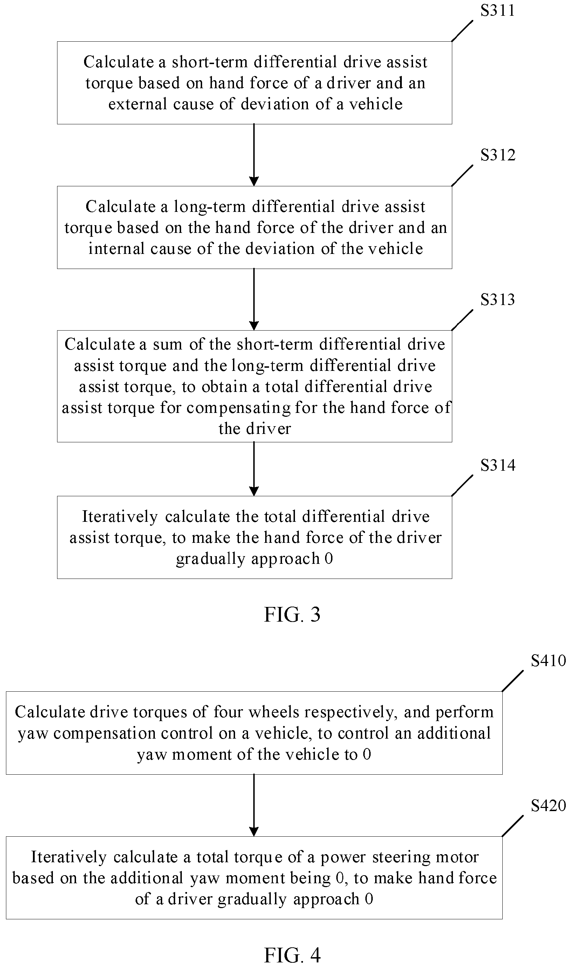

As shown in FIG. 3, S310 in the pull drift compensation control method in Embodiment 1 includes the following steps.

S311: Calculate a short-term differential drive assist torque based on the hand force of the driver and an external cause of deviation of the vehicle.

S312: Calculate a long-term differential drive assist torque based on the hand force of the driver and an internal cause of the deviation of the vehicle.

S313: Calculate a sum of the short-term differential drive assist torque and the long-term differential drive assist torque, to obtain the total differential drive assist torque for compensating for the hand force of the driver.

S314: Iteratively calculate the total differential drive assist torque, to make the hand force of the driver gradually approach 0.

With reference to FIG. 2 and FIG. 3, in S300, pull drift compensation is performed through differential drive assist steering, which is implemented based on the hand force of the driver by controlling four drive motors.

First, in step S310, the differential drive assist torque required for pull drift compensation control is calculated based on the hand force of the driver when the vehicle runs straight. Deviation of the vehicle is caused by an internal factor (for example, a suspension, tire wear, and a wheel positioning parameter) and an external factor (for example, cross wind and an inclined road surface). The required differential drive assist torque needs to be calculated for the internal factor and

6

the external factor respectively. For deviation caused by the external factor, a required short-term differential drive assist torque $\Delta T_{DS}$ is mainly calculated through short-term compensation based on the hand force $T_h$ of the driver. $\Delta T_{DS}$ slowly decreases to 0 after pull drift compensation is stopped, and also slowly decreases to 0 when the system is powered off. Time when short-term compensation tends to be stable may be controlled by adjusting a value of a short-term compensation iteration coefficient $C_S$. A specific calculation method for the short-term differential drive assist torque $\Delta T_{DS}$ is shown in the following formula:

$$\Delta T_{DS}\left(z\right) = \Delta T_{DS}\left(z-1\right) + \frac{1}{C_S} T_h\left(z\right)$$

In the formula, *z* indicates a current moment, and *z* - 1 indicates a previous moment.

For deviation caused by the internal factor, a required long-term differential drive assist torque $\Delta T_{DS}$ is mainly calculated through long-term compensation based on the hand force $T_h$ of the driver and a short-term differential drive assist torque $\Delta T_{DS}$. When pull drift compensation is stopped, $\Delta T_{DL}$ remains a value at the previous moment. When the system is powered off, the value is stored as an initial value of long-term compensation in a next power-on cycle. Time when long-term compensation tends to be stable may be controlled by adjusting a value of a long-term compensation iteration coefficient $C_L$. The time when long-term compensation tends to be stable should be greater than time when short-term compensation tends to be stable. A specific calculation method for the long-term differential drive assist torque $\Delta T_{DL}$ is shown in the following formula:

$$\Delta T_{DL}\left(z\right) = \Delta T_{DL}\left(z-1\right) + \frac{1}{C_L}\left[T_h\left(z\right) + \Delta T_{DS}\left(z\right)\right]$$

A sum of the short-term differential drive assist torque $\Delta T_{DS}$ and the long-term differential drive assist torque $\Delta T_{DL}$ is a total differential drive assist torque $\Delta T_D$ required for compensating for the hand force of the driver. A specific calculation method is shown in the following formula:

$$\Delta T_D\left(z\right) = \Delta T_{DS}\left(z\right) + \Delta T_{DL}\left(z\right)$$

Iterative calculation is performed continuously according to the formula for calculating the differential drive assist torque until the hand force of the driver approaches 0.

In step S320, drive torques of drive motors of the two front wheels are calculated based on the total differential drive assist torque $\Delta T_D$. Specific calculation formulas are as follows:

$$T_1 = \frac{1}{2}T_f - \Delta T_D$$

$$T_2 = \frac{1}{2}T_f + \Delta T_D$$

In the formulas, $T_f$ indicates a front axle drive torque, and $T_1$ and $T_2$ indicate a drive torque of a left front wheel and a drive torque of a right front wheel.

In step S330, yaw compensation control is performed on the entire vehicle based on the total differential drive assist torque $\Delta T_D$. When differential drive assist steering compensates for the hand force of the driver by using the total differential drive assist torque $\Delta T_D$, the additional yaw moment is also formed for the entire vehicle. However, an expected yaw rate of the vehicle in a straight running process is 0. Therefore, the drive torques of the rear wheels need to be controlled, to offset the additional yaw moment formed by the front wheels. To control the additional yaw moment of the entire vehicle to 0, the drive torques of the rear wheels need to satisfy the following conditions:

$$T_r = T_3 + T_4$$

$$\Delta T_D = \frac{1}{2}\left(T_3 - T_4\right)$$

In the formulas, $T_r$ indicates a rear axle drive torque, and $T_3$ and $T_4$ indicate a drive torque of a left rear wheel and a drive torque of a right rear wheel. After the foregoing conditions are satisfied, the drive torques of the rear wheels may further be calculated as follows:

$$T_3 = \frac{1}{2}T_r + \Delta T_D$$

$$T_4 = \frac{1}{2}T_r - \Delta T_D$$

In a process of performing pull drift compensation control through differential drive assist steering, the torque of the power steering motor is controlled to 0.

As shown in FIG. 4, S400 in the pull drift compensation control method in Embodiment 1 includes the following steps.

S410: Calculate drive torques of four wheels respectively, and perform yaw compensation control on a vehicle, to control an additional yaw moment of the vehicle to 0.

S420: Iteratively calculate a total torque of the power steering motor based on the additional yaw moment being 0, to make the hand force of the driver gradually approach 0.

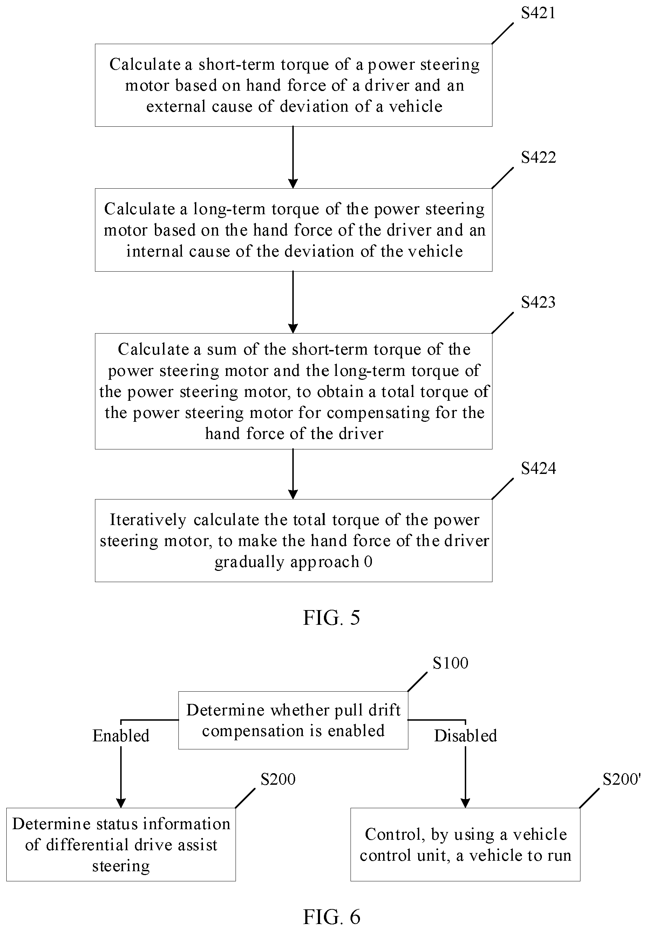

As shown in FIG. 5, S420 in the pull drift compensation control method in Embodiment 1 includes the following steps.

S421: Calculate a short-term torque of the power steering motor based on the hand force of the driver and an external cause of deviation of the vehicle.

S422: Calculate a long-term torque of the power steering motor based on the hand force of the driver and an internal cause of the deviation of the vehicle.

S423: Calculate a sum of the short-term torque of the power steering motor and the long-term torque of the power steering motor, to obtain the total torque of the power steering motor for compensating for the hand force of the driver.

S424: Iteratively calculate the total torque of the power steering motor, to make the hand force of the driver gradually approach 0.

In S400, when differential drive assist steering fails for a specific cause (for example, a drive motor fault), pull drift compensation control is performed through electric power steering by controlling the power steering motor based on the hand force of the driver.

When pull drift compensation control is performed through electric power steering, a yaw rate of the vehicle needs to be first ensured to be 0. In addition, if drive torques of the two front wheels are different, additional steering power may be generated, which affects the hand force applied by the driver on the steering wheel. Therefore, before the torque of the power steering motor is calculated, yaw compensation control needs to be performed on the vehicle first. Based on this, the torque of the power steering motor is iteratively calculated by considering impact of an internal factor, an external factors, and yaw compensation control until the hand force of the driver approaches 0.

In step S410, yaw compensation control is first performed on the vehicle, to control the additional yaw moment of the entire vehicle to 0. In this case, the drive torques of the four wheels need to satisfy the following constraint conditions:

$$T_f = T_1 + T_2$$

$$T_r = T_3 + T_4$$

$$T_1 - T_2 = T_4 - T_3$$

Specifically, the drive torques of the four wheels may further be obtained through calculation with reference to another vehicle dynamic control function. For example, if a motor of a left front wheel is faulty, the drive torques of the four wheels may be obtained as follows:

$$T_1 = 0$$

$$T_2 = T_f$$

$$T_3 = \frac{T_r + T_f}{2}$$

$$T_4 = \frac{T_r - T_f}{2}$$

After yaw compensation control is performed on the entire vehicle, in step S420, the torque of the power steering motor that is required for pull drift compensation control is calculated based on the hand force of the driver when the vehicle runs straight. The required torque of the power steering motor needs to be calculated for the internal factor and the external factor that cause deviation of the vehicle respectively. For deviation caused by the external factor, a required short-term torque $T_{ES}$ of the power steering motor is mainly calculated through short-term compensation based on the hand force $T_h$ of the driver. $T_{ES}$ slowly decreases to 0 after pull drift compensation is stopped, and also slowly decreases to 0 when the system is powered off. Time when short-term compensation tends to be stable may be controlled by adjusting a value of a short-term compensation iteration coefficient $C_S$. A specific calculation method for the short-term torque $T_{ES}$ of the power steering motor is shown in the following formula:

$$T_{ES}(z) = T_{ES}(z-1) + \frac{1}{C_S} T_h(z)$$

For deviation caused by the internal factor, a required long-term torque $T_{EL}$ of the **power steering** motor is mainly calculated through long-term compensation based on the hand force $T_h$ of the driver and a short-term torque $T_{ES}$ of the power steering motor. When pull drift compensation is stopped, $T_{EL}$ remains a value at a previous moment. When the system is powered off, the value is stored as an initial compensation value of long-term compensation in a next power-on cycle. Time when long-term compensation tends to be stable may be controlled by adjusting a value of a long-term compensation iteration coefficient $C_L$. The time when long-term compensation tends to be stable should be greater than time when short-term compensation tends to be stable. A specific calculation method for the long-term torque $T_{EL}$ of the power steering motor is shown in the following formula:

$$T_{EL}(z) = T_{EL}(z-1) + \frac{1}{C_L}\left[T_h(z) + T_{ES}(z)\right]$$

A sum of the short-term torque $T_{ES}$ of the power steering motor and the long-term torque $T_{EL}$ of the power steering motor is a total torque $T_E$ of the power steering motor that is required for compensating for the hand force of the driver. A specific calculation method is shown in the following formula:

$$T_E(z) = T_{EL}(z) + T_{ES}(z)$$

Iterative calculation is performed continuously according to the formula for calculating the torque of the power steering motor until the hand force of the driver approaches 0.

As shown in FIG. 6, before S200, the pull drift compensation control method in Embodiment 1 includes the following step.

S100: Determine whether pull drift compensation is enabled.

If pull drift compensation is enabled, S200 is performed to determine the status information of differential drive assist steering.

If pull drift compensation is disabled, S200' is performed to control, by using a vehicle control unit, a vehicle to run.

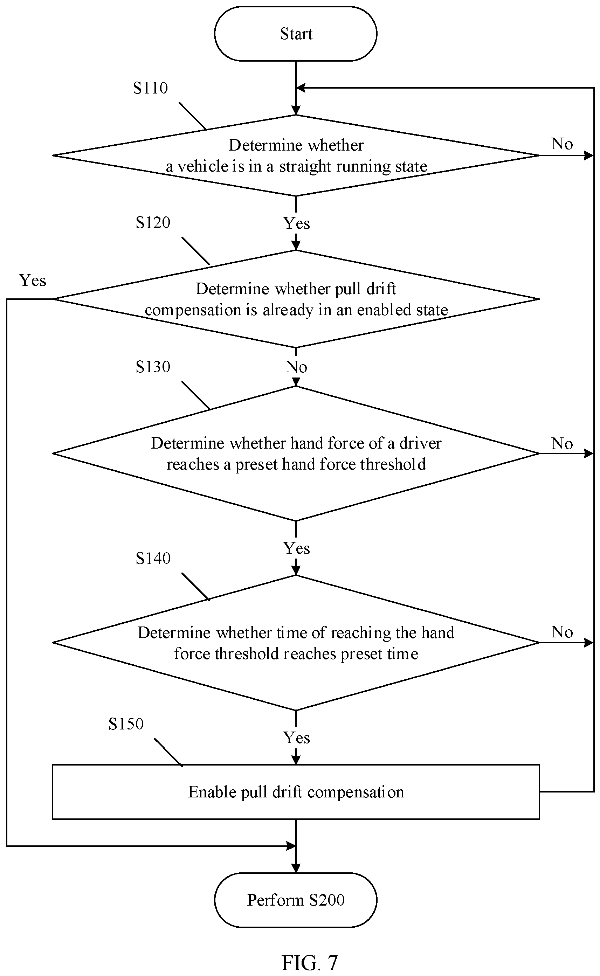

As shown in FIG. 7, S100 in the pull drift compensation control method in Embodiment 1 includes the following steps.

S110: Determine whether the vehicle is in a straight running state. If the vehicle is not in the straight running state, step S110 is performed; or if the vehicle is in the straight running state, step S120 is performed.

S120: Determine whether pull drift compensation is already in an enabled state.

If pull drift compensation is already in the enabled state, S200 is performed to determine the status information of differential drive assist steering.

If pull drift compensation is not in the enabled state, S130 is performed to determine whether the hand force of the driver reaches a preset hand force threshold.

If the hand force of the driver reaches the preset hand force threshold, S140 is performed to determine whether time of reaching the hand force threshold reaches preset time.

If the time of reaching the hand force threshold reaches the preset time, S150 is performed to enable pull drift compensation, and S200 is performed to determine the status information of differential drive assist steering.

First, step S110 is performed to determine whether the vehicle is in the straight running state. If the vehicle is not in the straight running state, step S110 is performed; or if the vehicle is in the straight running state, step S120 is performed. Conditions for determining whether the vehicle is in the straight running state are as follows:

(1) a vehicle speed $\geq u_0$;
(2) a steering wheel angle $\leq \delta_0$, and a steering wheel speed $\leq \dot{\delta}_0$;
(3) a longitudinal acceleration $\leq a_{x0}$;
(4) a lateral acceleration $\leq a_{y0}$; and
(5) a yaw rate of a center of mass of the vehicle $\leq \omega_{r0}$.

It is determined that the vehicle is in the straight running state only when the foregoing five conditions are satisfied. $u_0$, $\delta_0$, $\dot{\delta}_0$, $a_{x0}$, $a_{y0}$, and $\omega_{r0}$ indicate a vehicle speed threshold, a steering wheel angle threshold, a steering wheel speed threshold, a longitudinal acceleration threshold, a lateral acceleration threshold, and a yaw rate threshold.

In step S120, whether pull drift compensation is already enabled is determined. If pull drift compensation is already enabled, S200 is performed; or if pull drift compensation is disabled, step S130 is performed.

In step S130, whether the hand force of the driver reaches the hand force threshold $T_{h0}$ is determined. If the hand force of the driver does not reach the hand force threshold, step S110 is performed; or if the hand force of the driver reaches the hand force threshold, step S140 is performed.

In step S140, timing is started when the hand force of the driver is greater than the hand force threshold $T_{h0}$. When timing time is greater than a time threshold $t$, step S150 is performed; or if timing time is not greater than a time threshold, step S110 is performed.

In step S150, a pull drift compensation enable signal is sent, step S200 is performed, and in addition, step S110 is performed, to start a new round of pull drift compensation enable determining.

## Embodiment 2

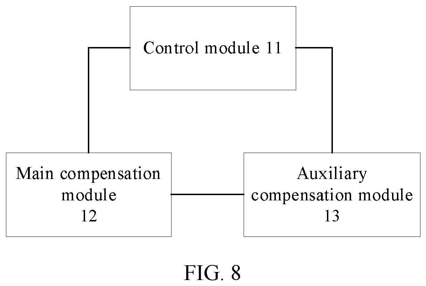

As shown in FIG. 8, Embodiment 2 of this application discloses a pull drift compensation assist system, including a control module 11, a main compensation module 12, and an auxiliary compensation module 13 that communicate with each other.

The control module 11 is configured to determine status information of differential drive assist steering. When differential drive assist steering works, the main compensation module 12 is configured to control, through the control module 11, pull drift compensation to be performed through differential drive assist steering; when differential drive assist steering fails, the auxiliary compensation module 13 is configured to control, through the control module 11, pull drift compensation to be performed through electric power steering.

In the pull drift compensation assist system in Embodiment 2, the control module 11 is connected to drive motors 14 of four wheels of a vehicle, and is connected to a power steering motor 16 connected to a steering gear 15 of the vehicle. When the main compensation module 12 is started, the control module 11 controls the four drive motors 14 to perform pull drift compensation; or when the auxiliary compensation module 13 is started, the control module 11 controls the power steering motor 16 to perform pull drift compensation.

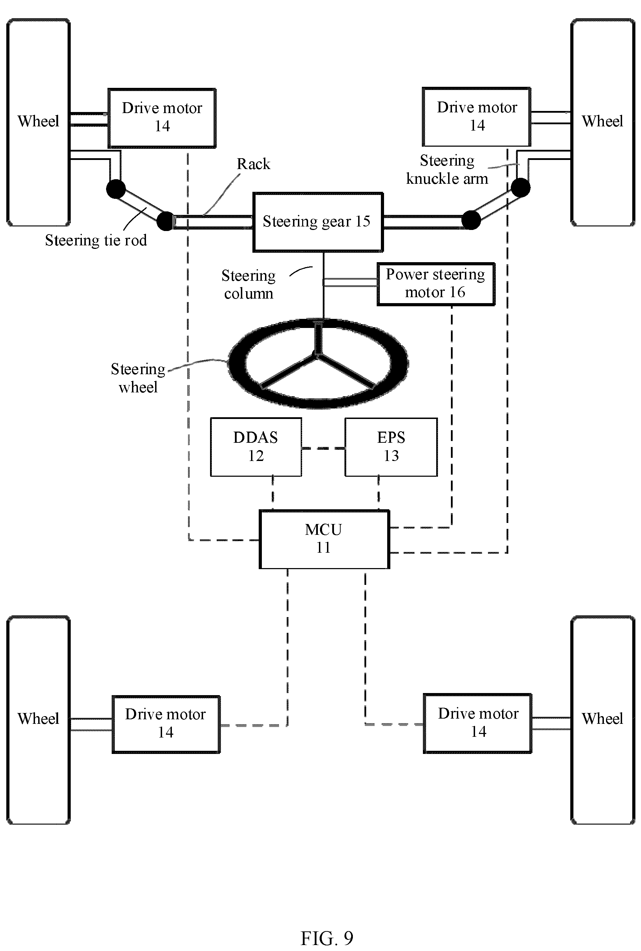

As shown in FIG. 9, the pull drift compensation assist system in Embodiment 2 is mainly used in a scenario in which the vehicle runs straight, to compensate for hand force of a driver. This dual-redundancy pull drift compensation assist system mainly includes a motor control unit (MCU, Motor Control Unit) (that is, the control module 11), differential drive assist steering (that is, the main compensation module 12), and electric power steering (that is, the auxiliary compensation module 13). Differential drive assist steering (that is, the main compensation module 12) and electric power steering (that is, the auxiliary compensation module 13) form a main/auxiliary redundant pull drift compensation system. Pull drift compensation control is performed through differential drive assist steering by controlling the drive motors 14 of the four wheels. Pull drift compensation control is performed through electric power steering by controlling the power steering motor 16. Information exchange may be performed between any two of differential drive assist steering, electric power steering, and the motor control unit. Differential drive assist steering and electric power steering send drive torque instructions of the four drive motors 14 and torque instructions of the power steering motor 16 to the motor control unit. The motor control unit controls the drive motors 14 and the power steering motor 16, to compensate for the hand force of the driver.

## Embodiment 3

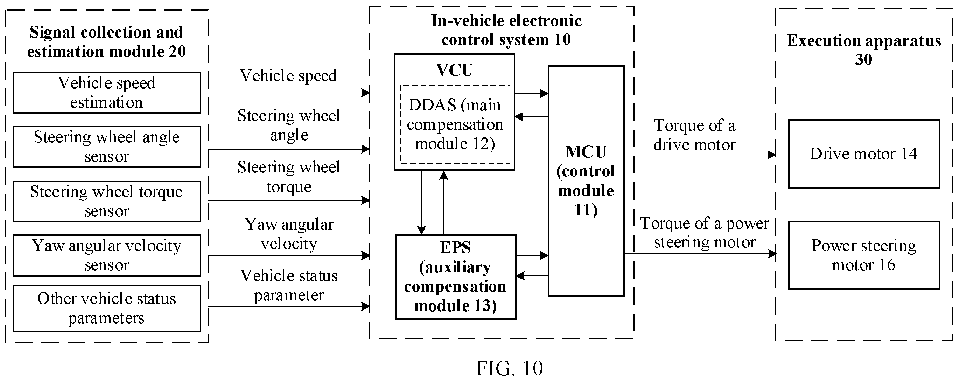

As shown in FIG. 10, Embodiment 3 of this application discloses an electronic device, including an in-vehicle electronic control system 10, a signal collection and estimation module 20, and an execution apparatus 30. The in-vehicle electronic control system 10 has the pull drift compensation assist system in Embodiment 2 of this application. The signal collection and estimation module 20 has a plurality of vehicle status sensors configured to measure vehicle status parameters. The execution apparatus 30 has the drive motors and the power steering motor in Embodiment 2 of this application.

The signal collection and estimation module 20 sends a plurality of vehicle status parameters collected by the plurality of vehicle status sensors to the in-vehicle electronic control system 10. The in-vehicle electronic control system 10 controls the drive motors and the power steering motor based on the plurality of vehicle status parameters, so that the electronic device performs the pull drift compensation control method in Embodiment 1.

Specifically, the electronic device in Embodiment 3 mainly includes three parts: the in-vehicle electronic control system 10, the signal collection and estimation module 20, and the execution apparatus 30. The in-vehicle electronic control system 10 mainly includes electric power steering (that is, the auxiliary compensation module 13), a vehicle control unit (VCU, Vehicle Control Unit), the motor control unit (that is, the control module 11), and the like. Control logic of differential drive assist steering is generally set in the vehicle control unit, that is, the vehicle control unit has the main compensation module 12. The signal collection and estimation module 20 mainly includes vehicle speed estimation, a yaw rate sensor, a steering wheel angle sensor, a steering wheel torque sensor, a longitudinal acceleration sensor, and other vehicle status sensors and vehicle parameters. The execution apparatus 30 mainly includes the drive motors 14 and the power steering motor 16. With reference to FIG. 9, the signal collection and estimation module 20 transfers a vehicle speed, a steering wheel angle, hand force of a driver (a steering wheel torque), a yaw rate, and other vehicle status information to the in-vehicle electronic control system 10. In the in-vehicle electronic control system 10, information exchange is performed between differential drive assist steering, electric power steering, and the motor control unit, to determine a system for pull drift compensation control. If pull drift compensation control is performed through differential drive assist steering, a torque of the power steering motor is controlled to 0, and torques of the drive motors are further calculated; or if pull drift compensation control is performed through electric power steering, torques of the drive motors and a torque of the power steering motor are calculated respectively. Finally, the in-vehicle electronic control system 10 sends torque instructions of the drive motors and torque instructions of the power steering motor to the execution apparatus 30 such as the drive motors 14 and the power steering motor 16 respectively, to implement effective control on a vehicle.

## Embodiment 4

Embodiment 4 of this application further provides a computer-readable storage medium, including program instructions. When the program instructions run on a computer device, the computer device is enabled to perform the pull drift compensation control method as described in the first aspect.

Compared with the conventional technology, the technical solutions have at least the following beneficial effects.

According to the pull drift compensation assist system and the control method disclosed in embodiments of this application, compensation can be performed through differential drive assist steering, to effectively reduce occurrence of a long-time motor blocking phenomenon, reduce a motor fault risk, and reduce a motor performance deterioration degree. Compensation through differential drive assist steering may expand a hand force compensation range. Main/auxiliary system redundancy backup of differential drive assist steering and electric power steering may reduce a failure probability of pull drift compensation, and improve running safety of the vehicle. Long-term compensation and short-term compensation are performed concurrently, so that compensation for both deviation caused by an external factor and deviation caused by a factor of the vehicle may be implemented.

All or some of the foregoing embodiments may be implemented by software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on a computer, processes or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk, (Solid State Disk)), or the like.

In the foregoing embodiments, the processor may include, for example, a central processing unit (CPU, central processing unit), a microprocessor, a microcontroller, or a digital signal processor, and may further include a graphics processing unit (GPU, graphics processing unit), a network processor (NPU, Neural-network Processing Unit), and an internet service provider (ISP, Internet Service Provider). The processor may further include a necessary hardware accelerator or logic processing hardware circuit, for example, an application-specific integrated circuit (ASIC, application-specific integrated circuit), or one or more integrated circuits configured to control program execution of the technical solutions of this application. In addition, the processor may have a function of operating one or more software programs, and the software program may be stored in a memory.

The memory may be but is not limited to a read-only memory (ROM, read-only memory), another type of static storage device capable of storing static information and instructions, a random access memory (RAM, random access memory), or another type of dynamic storage device capable of storing information and instructions, may be an electrically erasable programmable read-only memory (EEPROM, electrically erasable programmable read-only memory), a compact disc read-only memory (CD-ROM, compact disc read-only memory) or another compact disc storage, an optical disc storage (including a compact disc, a laser disc, an optical disc, a digital versatile disc, a Blu-ray disc, and the like), a magnetic disk storage medium, or another magnetic storage device, or may be any other medium that can be used to carry or store expected program code in a form of an instruction or a data structure and that can be accessed by the computer.

In embodiments of this application, "at least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists. A and B may be singular or plural. The character "/" generally indicates an "or" relationship between the associated objects. "At least one of the following items" or a similar expression thereof means any combination of these items, including a single item or any combination of a plurality of items. For example, at least one of a, b, and c may indicate: a, b, c, a-b, a-c, b-c, or a-b-c, where a, b, and c may be singular or plural.

A person of ordinary skill in the art may be aware that the units and algorithm steps described in embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiment, and details are not described again herein.

In embodiments of this application, when any of the functions is implemented in a form of a software function unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium capable of storing program code, such as a USB flash drive, a removable hard disk, a read-only memory, a random access memory, a magnetic disk, or an optical disc. The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1.   A pull drift compensation control method, comprising:

determining (S200) status information of differential drive assist steering; and
when differential drive assist steering works, performing (S300) pull drift compensation through differential drive assist steering; or
when differential drive assist steering fails, performing (S400) pull drift compensation through electric power steering.

2. The pull drift compensation control method according to claim 1, wherein the step of performing pull drift compensation through differential drive assist steering comprises:

iteratively calculating (S310) a total differential drive assist torque, to make hand force of a driver gradually approach 0;
calculating drive torques (S320) of two front wheels based on the total differential drive assist torque; and
performing (S330) yaw compensation control on a vehicle based on the total differential drive assist torque, to control an additional yaw moment of the vehicle to 0, and calculating drive torques of two rear wheels.

3. The pull drift compensation control method according to claim 2, wherein the step of iteratively calculating a total differential drive assist torque, to make hand force of a driver gradually approach 0 comprises:

calculating (S311) a short-term differential drive assist torque based on the hand force of the driver and an external cause of deviation of the vehicle;
calculating (S312) a long-term differential drive assist torque based on the hand force of the driver and an internal cause of the deviation of the vehicle;
calculating (S313) a sum of the short-term differential drive assist torque and the long-term differential drive assist torque, to obtain the total differential drive assist torque for compensating for the hand force of the driver; and
iteratively calculating (S314) the total differential drive assist torque, to make the hand force of the driver gradually approach 0.

4. The pull drift compensation control method according to claim 1, wherein the step of performing pull drift compensation through electric power steering comprises:

calculating (S410) drive torques of four wheels respectively, and performing yaw compensation control on a vehicle, to control an additional yaw moment of the vehicle to 0; and
iteratively calculating (S420) a total torque of a power steering motor based on the additional yaw moment being 0, to make hand force of a driver gradually approach 0.

5. The pull drift compensation control method according to claim 4, wherein the step of iteratively calculating a total torque of a power steering motor based on the additional yaw moment being 0, to make hand force of a driver gradually approach 0 comprises:

calculating (S421) a short-term torque of the power steering motor based on the hand force of the driver and an external cause of deviation of the vehicle;
calculating (S422) a long-term torque of the power steering motor based on the hand force of the driver and an internal cause of the deviation of the vehicle;
calculating (S423) a sum of the short-term torque of the power steering motor and the long-term torque of the power steering motor, to obtain the total torque of the power steering motor for compensating for the hand force of the driver; and
iteratively calculating (S424) the total torque of the power steering motor, to make the hand force of the driver gradually approach 0.

6. The pull drift compensation control method according to claim 1, wherein before the step of determining status information of differential drive assist steering, the pull drift compensation control method comprises:

determining (S100) whether pull drift compensation is enabled; and
if pull drift compensation is enabled, determining (S200) the status information of differential drive assist steering; or
if pull drift compensation is disabled, controlling (S200') pull drift compensation of a vehicle by using a motor control unit of the vehicle.

7. The pull drift compensation control method according to claim 6, wherein the step of determining whether pull drift compensation is enabled comprises:

determining (S110) whether the vehicle is in a straight running state;
determining (S120) whether pull drift compensation is already in an enabled state; and
if pull drift compensation is already in the enabled state, determining (S200) the status information of differential drive assist steering; or

if pull drift compensation is not in the enabled state, determining (S130) whether hand force of a driver reaches a preset hand force threshold;

if the hand force of the driver reaches the preset hand force threshold, determining (S140) whether time of reaching the hand force threshold reaches preset time; and

if the time of reaching the hand force threshold reaches the preset time, enabling (S150) pull drift compensation, and determining the status information of differential drive assist steering.

8. A pull drift compensation assist system, comprising a control module (11), a main compensation module (12), and an auxiliary compensation module (13) that communicate with each other, wherein

the control module is configured to determine status information of differential drive assist steering; and

when differential drive assist steering works, the main compensation module is configured to control, through the control module, pull drift compensation to be performed through differential drive assist steering;

when differential drive assist steering fails, the auxiliary compensation module is configured to control, through the control module, pull drift compensation to be performed through electric power steering.

9. The pull drift compensation assist system according to claim 8, wherein the control module (11) is connected to drive motors of four wheels of a vehicle, and is connected to a power steering motor connected to a steering gear of the vehicle; and

when the main compensation module (12) is started, the control module controls the four drive motors to perform pull drift compensation;

when the auxiliary compensation module (13) is started, the control module controls the power steering motor to perform pull drift compensation.

10. An electronic device, comprising an in-vehicle electronic control system, a signal collection and estimation module, and an execution apparatus, wherein the in-vehicle electronic control system has the pull drift compensation assist system according to claim 8 or 9, the signal collection and estimation module has a plurality of vehicle status sensors configured to measure vehicle status parameters, and the execution apparatus has the drive motors and the power steering motor according to claim 9; and

the signal collection and estimation module sends a plurality of vehicle status parameters collected by the plurality of vehicle status sensors to the in-vehicle electronic control system, and the in-vehicle electronic control system controls the drive motors and the power steering motor based on the plurality of vehicle status parameters, so that the electronic device performs the pull drift compensation control method according to any one of claims 1 to 7.

11. A computer-readable storage medium, comprising program instructions, wherein when the program instructions run on a computer device, the computer device is enabled to perform the pull drift compensation control method according to any one of claims 1 to 7.

## Patentansprüche

1. Zugdriftkompensationssteuerungsverfahren, das Folgendes umfasst:

Bestimmen (S200) von Statusinformationen einer Differentialantriebshilfslenkung; und

wenn die Differentialantriebshilfslenkung arbeitet, Durchführen (S300) einer Zugdriftkompensation durch die Differentialantriebshilfslenkung; oder

wenn die Differentialantriebshilfslenkung ausfällt, Durchführen (S400) einer Zugdriftkompensation durch eine elektrische Servolenkung.

2. Zugdriftkompensationssteuerungsverfahren nach Anspruch 1, wobei der Schritt des Durchführens einer Zugdriftkompensation durch die Differentialantriebshilfslenkung Folgendes umfasst:

iteratives Berechnen (S310) eines Gesamtdifferentialantriebshilfsdrehmoments, um eine Handkraft eines Fahrers sich allmählich 0 annähern zu lassen;

Berechnen von Antriebsdrehmomenten (S320) von zwei Vorderrädern basierend auf dem Gesamtdifferentialantriebshilfsdrehmoment; und

EP 4 393 791 B1

Durchführen (S330) einer Gierkompensationssteuerung an einem Fahrzeug basierend auf dem Gesamtdifferentialantriebshilfsdrehmoment, um ein zusätzliches Giermoment des Fahrzeugs auf 0 zu steuern, und Berechnen von Antriebsdrehmomenten von zwei Hinterrädern.

3. Zugdriftkompensationssteuerungsverfahren nach Anspruch 2, wobei der Schritt des iterativen Berechnens eines Gesamtdifferentialantriebshilfsdrehmoments, um eine Handkraft eines Fahrers sich allmählich 0 annähern zu lassen, Folgendes umfasst:

Berechnen (S311) eines Kurzzeitdifferentialantriebshilfsdrehmoments basierend auf der Handkraft des Fahrers und einer externen Ursache einer Abweichung des Fahrzeugs;
Berechnen (S312) eines Langzeitdifferentialantriebshilfsdrehmoments basierend auf der Handkraft des Fahrers und einer internen Ursache der Abweichung des Fahrzeugs;
Berechnen (S313) einer Summe des Kurzzeitdifferentialantriebshilfsdrehmoments und des Langzeitdifferentialantriebshilfsdrehmoments, um das Gesamtdifferentialantriebshilfsdrehmoment zum Kompensieren der Handkraft des Fahrers zu erlangen; und
iteratives Berechnen (S314) des Gesamtdifferentialantriebshilfsdrehmoments, um die Handkraft des Fahrers sich allmählich 0 annähern zu lassen.

4. Zugdriftkompensationssteuerungsverfahren nach Anspruch 1, wobei der Schritt des Durchführens einer Zugdriftkompensation durch eine elektrische Servolenkung Folgendes umfasst:

jeweiliges Berechnen (S410) von Antriebsdrehmomenten von vier Rädern und Durchführen einer Gierkompensationssteuerung an einem Fahrzeug, um ein zusätzliches Giermoment des Fahrzeugs auf 0 zu steuern; und
iteratives Berechnen (S420) eines Gesamtdrehmoments eines Servolenkungsmotors basierend darauf, dass das zusätzliche Giermoment 0 ist, um eine Handkraft eines Fahrers sich allmählich 0 annähern zu lassen.

5. Zugdriftkompensationssteuerungsverfahren nach Anspruch 4, wobei der Schritt des iterativen Berechnens eines Gesamtdrehmoments eines Servolenkungsmotors basierend darauf, dass das zusätzliche Giermoment 0 ist, um eine Handkraft eines Fahrers sich allmählich 0 annähern zu lassen, Folgendes umfasst:

Berechnen (S421) eines Kurzzeitdrehmoments des Servolenkungsmotors basierend auf der Handkraft des Fahrers und einer externen Ursache einer Abweichung des Fahrzeugs;
Berechnen (S422) eines Langzeitdrehmoments des Servolenkungsmotors basierend auf der Handkraft des Fahrers und einer internen Ursache der Abweichung des Fahrzeugs;
Berechnen (S423) einer Summe des Kurzzeitdrehmoments des Servolenkungsmotors und des Langzeitdrehmoments des Servolenkungsmotors, um das Gesamtdrehmoment des Servolenkungsmotors zum Kompensieren der Handkraft des Fahrers zu erlangen; und
iteratives Berechnen (S424) des Gesamtdrehmoments des Servolenkungsmotors, um die Handkraft des Fahrers sich allmählich 0 annähern zu lassen.

6. Zugdriftkompensationssteuerungsverfahren nach Anspruch 1, wobei vor dem Schritt des Bestimmens von Statusinformationen einer Differentialantriebshilfslenkung das Zugdriftkompensationssteuerungsverfahren Folgendes umfasst:

Bestimmen (S100), ob eine Zugdriftkompensation aktiviert ist; und
wenn die Zugdriftkompensation aktiviert ist, Bestimmen (S200) der Statusinformationen der Differentialantriebshilfslenkung; oder
wenn die Zugdriftkompensation deaktiviert ist, Steuern (S200') einer Zugdriftkompensation eines Fahrzeugs unter Verwendung einer Motorsteuereinheit des Fahrzeugs.

7. Zugdriftkompensationssteuerungsverfahren nach Anspruch 6, wobei der Schritt des Bestimmens, ob die Zugdriftkompensation aktiviert ist, Folgendes umfasst:

Bestimmen (S110), ob sich das Fahrzeug in einem Geradeauslaufzustand befindet;
Bestimmen (S120), ob sich die Zugdriftkompensation bereits in einem aktivierten Zustand befindet; und
wenn sich die Zugdriftkompensation bereits in dem aktivierten Zustand befindet, Bestimmen (S200) der Statusinformationen der Differentialantriebshilfslenkung; oder
wenn sich die Zugdriftkompensation nicht in dem aktivierten Zustand befindet, Bestimmen (S130), ob eine Handkraft eines Fahrers einen voreingestellten Handkraftschwellenwert erreicht;
wenn die Handkraft des Fahrers den voreingestellten Handkraftschwellenwert erreicht, Bestimmen (S140), ob eine Zeit des Erreichens des Handkraftschwellenwerts eine voreingestellte Zeit erreicht; und
wenn die Zeit des Erreichens des Handkraftschwellenwerts die voreingestellte Zeit erreicht, Aktivieren (S150) der Zugdriftkompensation und Bestimmen der Statusinformationen der Differentialantriebshilfslenkung.

8. Zugdriftkompensationshilfssystem, das ein Steuermodul (11), ein Hauptkompensationsmodul (12) und ein Zusatzkompensationsmodul (13) umfasst, die miteinander kommunizieren, wobei

das Steuermodul konfiguriert ist, um Statusinformationen einer Differentialantriebshilfslenkung zu bestimmen; und
wenn die Differentialantriebshilfslenkung arbeitet, das Hauptkompensationsmodul konfiguriert ist, um durch das Steuermodul zu steuern, dass eine Zugdriftkompensation durch die Differentialantriebshilfslenkung durchgeführt wird;
wenn die Differentialantriebshilfslenkung ausfällt, das Zusatzkompensationsmodul konfiguriert ist, um durch das Steuermodul zu steuern, dass eine Zugdriftkompensation durch eine elektrische Servolenkung durchgeführt wird.

9. Zugdriftkompensationshilfssystem nach Anspruch 8, wobei das Steuermodul (11) mit Antriebsmotoren von vier Rädern eines Fahrzeugs verbunden ist und mit einem Servolenkungsmotor verbunden ist, der mit einem Lenkgetriebe des Fahrzeugs verbunden ist; und

wenn das Hauptkompensationsmodul (12) gestartet wird, das Steuermodul die vier Antriebsmotoren steuert, um eine Zugdriftkompensation durchzuführen;
wenn das Zusatzkompensationsmodul (13) gestartet wird, das Steuermodul den Servolenkungsmotor steuert, um eine Zugdriftkompensation durchzuführen.

10. Elektronische Vorrichtung, die ein fahrzeuginternes elektronisches Steuersystem, ein Signalerfassungs- und Schätzungsmodul und eine Ausführungseinrichtung umfasst, wobei das fahrzeuginterne elektronische Steuersystem das Zugdriftkompensationshilfssystem nach Anspruch 8 oder 9 aufweist, das Signalerfassungs- und Schätzungsmodul eine Vielzahl von Fahrzeugstatussensoren aufweist, die konfiguriert ist, um Fahrzeugstatusparameter zu messen, und die Ausführungseinrichtung die Antriebsmotoren und den Servolenkungsmotor nach Anspruch 9 aufweist; und das Signalerfassungs- und Schätzungsmodul eine Vielzahl von Fahrzeugstatusparametern, die durch die Vielzahl von Fahrzeugstatussensoren erfasst wurde, an das fahrzeuginterne elektronische Steuersystem sendet und das fahrzeuginterne elektronische Steuersystem die Antriebsmotoren und den Servolenkungsmotor basierend auf der Vielzahl von Fahrzeugstatusparametern steuert, sodass die elektronische Vorrichtung das Zugdriftkompensationssteuerungsverfahren nach einem der Ansprüche 1 bis 7 durchführt.

11. Computerlesbares Speichermedium, das Programmanweisungen umfasst, wobei, wenn die Programmanweisungen auf einer Computervorrichtung laufen, die Computervorrichtung befähigt wird, das Zugdriftkompensationssteuerungsverfahren nach einem der Ansprüche 1 bis 7 durchzuführen.

**Revendications**

1. Procédé de commande de compensation de dérive de traction, comprenant :

la détermination (S200) d'informations d'état de la direction à assistance différentielle ; et
lorsque la direction à assistance différentielle fonctionne, la réalisation (S300) d'une compensation de dérive de traction par le biais de la direction à assistance différentielle ; ou
lorsque la direction à assistance différentielle tombe en panne, la réalisation (S400) d'une compensation de dérive de traction par le biais de la direction à assistance électrique.

2. Procédé de commande de compensation de dérive de traction selon la revendication 1, dans lequel l'étape de réalisation de la compensation de dérive de traction par le biais de la direction à assistance différentielle comprend :

le calcul itératif (S310) d'un couple d'assistance différentielle total, pour que la force manuelle d'un conducteur s'approche progressivement de 0 ;

le calcul des couples moteurs (S320) des deux roues avant sur la base du couple d'assistance différentielle total ; et

la réalisation (S330) de la commande de compensation de lacet sur un véhicule sur la base du couple d'assistance différentielle total, pour commander un moment de lacet supplémentaire du véhicule à 0, et le calcul des couples moteurs des deux roues arrière.

3. Procédé de commande de compensation de dérive de traction selon la revendication 2, dans lequel l'étape de calcul itératif d'un couple d'assistance différentielle total, pour faire en sorte que la force manuelle d'un conducteur s'approche progressivement de 0 comprend :

le calcul (S311) d'un couple d'assistance différentielle à court terme sur la base de la force manuelle du conducteur et d'une cause externe de déviation du véhicule ;
le calcul (S312) d'un couple d'assistance différentielle à long terme sur la base de la force manuelle du conducteur et d'une cause interne de déviation du véhicule ;
le calcul (S313) d'une somme du couple d'assistance différentielle à court terme et du couple d'assistance différentielle à long terme, pour obtenir le couple d'assistance différentielle total pour compenser la force manuelle du conducteur ; et
le calcul itératif (S314) du couple d'assistance différentielle total, pour que la force manuelle du conducteur s'approche progressivement de 0.

4. Procédé de commande de compensation de dérive de traction selon la revendication 1, dans lequel l'étape de réalisation de la compensation de dérive de traction par le biais de la direction à assistance électrique comprend :

le calcul (S410) de couples moteurs de quatre roues respectivement, et la réalisation d'une commande de compensation de lacet sur un véhicule, pour ramener un moment de lacet supplémentaire du véhicule à 0 ; et
le calcul itératif (S420) d'un couple total d'un moteur de direction assistée sur la base du moment de lacet supplémentaire étant de 0, pour faire en sorte que la force manuelle d'un conducteur se rapproche progressivement de 0.

5. Procédé de commande de compensation de dérive de traction selon la revendication 4, dans lequel l'étape de calcul itératif d'un couple total d'un moteur de direction assistée sur la base du moment de lacet supplémentaire étant de 0, pour faire en sorte que la force manuelle du conducteur s'approche progressivement de 0 comprend :

le calcul (S421) d'un couple à court terme du moteur de direction assistée sur la base de la force manuelle du conducteur et d'une cause externe de déviation du véhicule ;
le calcul (S422) d'un couple à long terme du moteur de direction assistée sur la base de la force manuelle du conducteur et d'une cause interne de déviation du véhicule ;
le calcul (S423) d'une somme du couple à court terme du moteur de direction assistée et du couple à long terme du moteur de direction assistée, pour obtenir le couple total du moteur de direction assistée pour compenser la force manuelle du conducteur ; et
le calcul itératif (S424) du couple total du moteur de direction assistée, pour que la force manuelle du conducteur s'approche progressivement de 0.

6. Procédé de commande de compensation de dérive de traction selon la revendication 1, dans lequel avant l'étape de détermination des informations d'état de la direction à assistance différentielle, le procédé de commande de compensation de dérive de traction comprend :

le fait de déterminer (S100) si la compensation de dérive de traction est activée ; et
si la compensation de dérive de traction est activée, la détermination (S200) des informations d'état de la direction à assistance différentielle ; ou
si la compensation de dérive de traction est désactivée, la commande (S200') de la compensation de dérive de traction d'un véhicule se réalise à l'aide d'une unité de commande moteur du véhicule.

7. Procédé de commande de compensation de dérive de traction selon la revendication 6, dans lequel l'étape du fait de déterminer si la compensation de dérive de traction est activée comprend :

le fait de déterminer (S110) si le véhicule est en état de marche en ligne droite ;
le fait de déterminer (S120) si la compensation de dérive de traction est déjà dans un état activé ; et

si la compensation de dérive de traction est déjà à l'état activé, la détermination (S200) des informations d'état de la direction à assistance différentielle ; ou

si la compensation de dérive de traction n'est pas à l'état activé, le fait de déterminer (S130) si la force manuelle d'un conducteur atteint un seuil de force manuelle prédéfini ;

si la force manuelle du conducteur atteint le seuil de force manuelle prédéfini, le fait de déterminer (S140) si le temps nécessaire pour atteindre le seuil de force manuelle atteint le temps prédéfini ; et

si le temps d'atteinte du seuil de force manuelle atteint le temps prédéfini, l'activation (S150) de la compensation de dérive de traction, et la détermination des informations d'état de la direction à assistance différentielle.

8. Système d'assistance à la compensation de dérive de traction, comprenant un module de commande (11), un module de compensation principal (12), et un module de compensation auxiliaire (13) qui communiquent entre eux, dans lequel

le module de commande est configuré pour déterminer les informations d'état de la direction à assistance différentielle ; et

lorsque la direction à assistance différentielle fonctionne, le module de compensation principal est configuré pour commander, par l'intermédiaire du module de commande, la compensation de dérive de traction à réaliser par le biais de la direction à assistance différentielle ;

en cas de défaillance de la direction à assistance différentielle, le module de compensation auxiliaire est configuré pour commander, par l'intermédiaire du module de commande, la compensation de dérive de traction à réaliser par la direction à assistance électrique.

9. Système d'assistance à la compensation de dérive de traction selon la revendication 8, dans lequel le module de commande (11) est relié aux moteurs d'entraînement de quatre roues d'un véhicule, et est relié à un moteur de direction assistée lui-même relié à un boîtier de direction du véhicule ; et

lorsque le module de compensation principal (12) est démarré, le module de commande commande les quatre moteurs d'entraînement pour réaliser une compensation de dérive de traction ;

lorsque le module de compensation auxiliaire (13) est démarré, le module de commande commande le moteur de direction assistée pour réaliser une compensation de dérive de traction.

10. Dispositif électronique, comprenant un système de commande électronique embarqué, un module de collecte et d'estimation de signaux, et un appareil d'exécution, dans lequel le système de commande électronique embarqué a le système d'assistance à la compensation de dérive de traction selon la revendication 8 ou 9, le module de collecte et d'estimation de signaux a une pluralité de capteurs d'état de véhicule configurés pour mesurer des paramètres d'état de véhicule, et l'appareil d'exécution a les moteurs d'entraînement et le moteur de direction assistée selon la revendication 9 ; et

le module de collecte et d'estimation de signaux envoie une pluralité de paramètres d'état de véhicule collectés par la pluralité de capteurs d'état de véhicule au système de commande électronique embarqué, et le système de commande électronique embarqué commande les moteurs d'entraînement et le moteur de direction assistée sur la base de la pluralité de paramètres d'état de véhicule, de sorte que le dispositif électronique réalise le procédé de commande de compensation de dérive de traction selon l'une quelconque des revendications 1 à 7.

11. Support de stockage lisible par ordinateur, comprenant des instructions de programme, dans lequel lorsque les instructions de programme fonctionnent sur un dispositif informatique, le dispositif informatique est activé pour réaliser le procédé de commande de compensation de dérive de traction selon l'une quelconque des revendications 1 à 7.

S200

Determine status information of differential drive assist steering

Working

Failing

S300

Perform pull drift compensation through differential drive assist steering

S400

Perform pull drift compensation through electric power steering

FIG. 1

S310

Iteratively calculate a total differential drive assist torque, to make hand force of a driver gradually approach 0

S320

Calculate drive torques of two front wheels based on the total differential drive assist torque

S330

Perform yaw compensation control on a vehicle based on the total differential drive assist torque, to control an additional yaw moment of the vehicle to 0, and calculate drive torques of two rear wheels

FIG. 2

S311

Calculate a short-term differential drive assist torque based on hand force of a driver and an external cause of deviation of a vehicle

S312

Calculate a long-term differential drive assist torque based on the hand force of the driver and an internal cause of the deviation of the vehicle

S313

Calculate a sum of the short-term differential drive assist torque and the long-term differential drive assist torque, to obtain a total differential drive assist torque for compensating for the hand force of the driver

S314

Iteratively calculate the total differential drive assist torque, to make the hand force of the driver gradually approach 0

FIG. 3

S410

Calculate drive torques of four wheels respectively, and perform yaw compensation control on a vehicle, to control an additional yaw moment of the vehicle to 0

S420

Iteratively calculate a total torque of a power steering motor based on the additional yaw moment being 0, to make hand force of a driver gradually approach 0

FIG. 4

S421

Calculate a short-term torque of a power steering motor based on hand force of a driver and an external cause of deviation of a vehicle

S422

Calculate a long-term torque of the power steering motor based on the hand force of the driver and an internal cause of the deviation of the vehicle

S423

Calculate a sum of the short-term torque of the power steering motor and the long-term torque of the power steering motor, to obtain a total torque of the power steering motor for compensating for the hand force of the driver

S424

Iteratively calculate the total torque of the power steering motor, to make the hand force of the driver gradually approach 0

FIG. 5

S100

Determine whether pull drift compensation is enabled

Enabled

Disabled

S200

Determine status information of differential drive assist steering

S200'

Control, by using a vehicle control unit, a vehicle to run

FIG. 6

Start

S110

Determine whether
a vehicle is in a straight running state → No

Yes

S120

Determine whether pull drift
compensation is already in an enabled state → Yes

No

S130

Determine whether hand force of a driver
reaches a preset hand force threshold → No

Yes

S140

Determine whether time of reaching the hand
force threshold reaches preset time → No

Yes

S150

Enable pull drift compensation

Perform S200

FIG. 7

Control module 11

Main compensation
module
12

Auxiliary
compensation module
13

FIG. 8

FIG. 9

FIG. 10

**Execution apparatus 30**

Drive motor 14

Power steering motor 16

Torque of a drive motor

Torque of a power steering motor

**In-vehicle electronic control system 10**

MCU (control module 11)

VCU

DDAS (main compensation module 12)

EPS (auxiliary compensation module 13)

Vehicle speed

Steering wheel angle

Steering wheel torque

Yaw angular velocity

Vehicle status parameter

**Signal collection and estimation module 20**

Vehicle speed estimation

Steering wheel angle sensor

Steering wheel torque sensor

Yaw angular velocity sensor

Other vehicle status parameters

25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102011121117 A1
- DE 102014204461 A1
- DE 102017204990 A1